## Europäisches Patentamt
## European Patent Office
## Office européen des brevets

(19)

(11) Veröffentlichungsnummer : **0 063 693**
**B1**

(12) # EUROPÄISCHE PATENTSCHRIFT

(45) Veröffentlichungstag der Patentschrift :
**25.07.84**

(51) Int. Cl.³ : **C 08 F 8/06**, C 08 F 8/50

(21) Anmeldenummer : **82102270.4**

(22) Anmeldetag : **19.03.82**

(54) Verfahren zur Herstellung von emulgierbarem Polyethylen durch Oxidation von Polyethylen im Wirbelbettreaktor.

(30) Priorität : **27.03.81 DE 3112163**

(43) Veröffentlichungstag der Anmeldung :
**03.11.82 Patentblatt 82/44**

(45) Bekanntmachung des Hinweises auf die Patenterteilung : **25.07.84 Patentblatt 84/30**

(84) Benannte Vertragsstaaten :
**DE FR GB IT**

(56) Entgegenhaltungen :
**DE-A- 1 495 887**
**DE-A- 1 770 028**
**DE-B- 1 197 230**
**DE-B- 1 237 783**

(73) Patentinhaber : **BASF Aktiengesellschaft
Carl-Bosch-Strasse 38
D-6700 Ludwigshafen (DE)**

(72) Erfinder : **Hettche, Albert, Dr.
Kleiststrasse 12
D-6711 Hessheim (DE)**
Erfinder : **Weiss, Stefan, Dr.
Carl-Beck-Strasse 46
D-6903 Neckargemuend (DE)**
Erfinder : **Miederer, Peter, Dr.
Barbarossastrasse 3
D-6733 Hassloch (DE)**
Erfinder : **Goethlich, Lutz, Dr.
Woogstrasse 65
D-6703 Limburgerhof (DE)**
Erfinder : **Ciprian, Juergen
Wildstrasse 17
D-6710 Frankenthal (DE)**

Jouve, 18, rue St-Denis, 75001 Paris, France

**Beschreibung**

Die Erfindung betrifft ein Verfahren zur Herstellung von oxidiertem in Wasser emulgierbarem Polyethylen, das infolge der Durchführung der Oxidation im Wirbelbett und der dadurch möglichen konstanten Temperaturführung zu wesentlich besseren Produkten im Hinblick auf ihre Typkonstanz führt.

Nach der Lehre der DE-OS-14 95 938 wird ein Polyethylen hoher Dichte mit geringen Mengen eines organischen Peroxids vermischt und in Gegenwart von Sauerstoff oder Sauerstoff enthaltenden Gasgemischen (Luft) längere Zeit auf eine Temperatur erhitzt, die unterhalb des Schmelzpunkts des Polyethylens und über 100 °C liegt. Am Schluß der Oxidation soll der Gehalt an Carboxyl 0,2 bis 2,0 Milliäquivalente pro Gramm betragen. Technisch soll das Verfahren in einem Ofen, einer rotierenden Trommel oder in einem Fließbett durchgeführt werden. Die ersten beiden Methoden haben aber den Nachteil, daß die Wärmeenergie von außen auf das System einwirken muß, um das im Innern der Trommel oder des Ofens befindliche Material auf die erforderliche Reaktionstemperatur zu erhitzen. Dabei befinden sich die Wandungen der Apparate häufig auf einer bereits zu hohen Temperatur, was bei nicht sorgfältiger Arbeitsweise zu Verklebungen führen kann.

Das Arbeiten im Fließbett ergibt lt. Tabelle 5 der dasselbe Verfahren beschreibenden DE-OS-14 95 887 gegenüber einer Behandlung im Ofen oder der Trockenbehandlung die relativ geringsten Carbonylgehalte bei gleicher Oxidationszeit (unter Luft) ; lediglich bei Verwendung reinen Sauerstoffs erhält man Carbonylwerte, die mit den nach den anderen Methoden erhaltenen vergleichbar sind. Es war daher verständlich, daß die Technik später nach wie vor auf die Ofenbehandlung oder Trommelbehandlung zurückgegriffen hat.

In unserem Hause sind in der letzten Zeit Versuche unternommen worden, die Oxidation von Polyethylen hoher Dichte analog den Bedingungen gemäß DE-OS-14 95 887 in einem Wirbelbettreaktor durchzuführen. Hierbei wird, wie allgemein bekannt, das auf die erforderliche Temperatur vorerwärmte Gasgemisch auf das pulverförmige Reaktionsgut geblasen, welches dann in der geschlossenen, nicht von außen erwärmten Reaktionskammer herumgewirbelt wird. Es zeigte sich dabei, daß trotz langer Reaktionsdauer in Gegenwart von radikalbildenden Initiatoren keine Oxidation stattfand — der Carbonylgehalt bzw. die Säurezahlen waren gleich Null. Dieser Befund ist vermutlich darauf zurückzuführen, daß bei der Wirbelbewegung Initiator und Polyethylen räumlich voneinander getrennt werden und demzufolge nicht mehr miteinander reagieren können.

Es war das Ziel der Erfindung, die Oxidation des Polyethylens trotzdem in einem Wirbelbettreaktor zu realisieren, da damit die Außenheizung entfällt und somit im gesamten Reaktor eine konstante Temperaturführung möglich ist.

Da die Sauerstoff-Konzentration in einem Wirbelschichtreaktor um jedes Einzelpartikel (ob groß oder klein) gleich ist, verläuft hier die Oxidation gleichmäßiger als in anderen Reaktoren. Da zudem in der Wirbelschicht selbst (bis auf Randzonen) keine Temperaturgradienten auftreten, sind aus verfahrenstechnischer Sicht ideale Oxidationsbedingungen gegeben. Der im Hinblick auf die spätere Verarbeitung des Polyethylenoxidats unerwünschte Nachteil, daß die großen Teilchen bei gleichen Temperaturen langsamer oxidiert werden als die kleinen, wird durch die geschilderten Verhältnisse im Wirbelbettreaktor ausgeglichen. Der beschriebene Vorteil kann natürlich durch die Verfahrensparameter (insbesondere Fahrweise unter Druck $\leqslant 5$ bar) noch variiert werden).

Das Ziel der Erfindung wurde überraschenderweise mit einem Verfahren erreicht, wie es gemäß den Ansprüchen 1 bis 3 definiert ist.

Hierbei setzt man ein Polyethylen miteiner Dichte von ca 0,93 bis 0,97 ein, das bei Temperaturen, die unterhalb des Erweichungspunktes und vorzugsweise oberhalb 90 °C, in noch bevorzugter Weise oberhalb 100 °C liegen, in Gegenwart einer radikalbildenden organischen Verbindung, die sich bei der Behandlungstemperatur zersetzt, thermisch unter Ausschluß von Sauerstoff behandelt worden ist.

Ein so vorbehandeltes Polyethylen läßt sich nun ohne weiteres im Wirbelbettreaktor zu Säurezahlen zwischen 10 und 50, wie dies für emulgierbare Polyethylene erforderlich ist, oxidieren. In dem so behandelten Polyethylen sind weder radikalbildende Substanzen noch deren Zerfallsprodukte nachweisbar, d. h. sie entweichen im gasförmigen Zustand aus dem System. Überraschenderweise wurde gefunden, daß dieses Polyethylen auch nach einjährigem Lagern bei Raumtemperatur seine Aktivität nicht verliert. Es ist zur Stunde noch nicht geklärt, welche chemischen Vorgänge sich bei der thermischen Behandlung, die in relativ kurzer Zeit abläuft, abspielen.

Das Verfahren läuft im einzelnen wie folgt ab :

Als « Polyethylen hoher Dichte » setzt man ein Polyethylen ein, das nach Ziegler oder Phillips unter niedrigem Druck erhalten worden ist, Dichten von ca. 0,93 bis 0,97 und einen Schmelzindex von unter 0,01 besitzt. Solche Polyethylene haben i. a. einen Erweichungspunkt (fälschlich auch als Schmelzpunkt bezeichnet) von ca. 135 bis 145 °C.

Als « radikalbildende organische Verbindungen » setzt man Stoffe ein, die unter den Bedingungen der thermischen Behandlung des Polyethylens in Radikale zerfallen. Im erfindungsgemäßen Sinne sollen die Radikalbildner innerhalb der Zeitdauer der thermischen Behandlung bei Temperaturen unterhalb der Erweichungstemperatur des Polyethylens zerfallen. Radikalbildner, die diesen Forderungen genügen,

2

sind beispielsweise organische Peroxide, wie Dibenzoylperoxid, Lauroylperoxid, Decanoylperoxid, Ditert.-Butyl-peroxid, tert.-Butylperoctoat, tert.-Butylisobutyrat, tert.-Butylperpivalat, tert.-Butylperbenzoat, 2,5-Dimethylhexan-2,5-diperbenzoat, 2,5-Dimethyl-2,5-di(t-Butylperoxi)-hexan, Trimethylpentyl-hydroperoxid, tert.-Butylhydroperoxid, Disuccinoylperoxid, Bis-(4-t-butylcyclohexyl)-peroxidicarbonat, Cumolhydroperoxid, 1-Butylper-2-ethylhexanoat, oder aliphatische Azoverbindungen, wie beispielsweise 2,2'-Azo-bis-(2,4-Dimethylvaleronitril), 2,2'-Azobis-(4-methyl-2,4-dimethylvaleronitril), 2,2'-Azobis-(2-amidinopropan)-hydrochlorid, 1,1'-Azobis-(cyclohexan-1-carbonitril), 4,4'-Azobis-(4-cyanvaleriansäure, von denen vor allem Azo-bis-(2-methylpropionitril) (« Azoisobutyronitril », kurz « AIBN » genannt) zu nennen ist.

Dem pulverförmigen Polyethylen mischt man den Radikalbildner in geringen Mengen, vorzugsweise in Mengen von 0,05 bis 2 Gew.-%, bezogen auf das Polyethylen, insbesondere von 0,1 bis 1 Gew.-% zu und erhitzt das Gemisch unter Ausschluß von Sauerstoff, d. h. unter Inertgas, wie Stickstoff, auf die genannte Temperatur, vorzugsweise auf 80 bis 130 °C. Die Erhitzungsdauer beträgt vorzugsweise 10 bis 120 Minuten. In den meisten Fällen genügt ca. 1 Stunde. Das so vorbehandelte Polyethylen wird, ohne daß ein weiterer Radikalbildner erforderlich ist, einem Wirbelbettreaktor zugeführt und bei Temperaturen unterhalb des Erweichungspunktes und oberhalb 80 °C, vorzugsweise 10 bis 5° unterhalb des Erweichungspunktes mit 0,3 bis 30 m³ Sauerstoff — in Form von beispielsweise Luft — pro kg Polyethylen bis zu Säurezahlen von 5 bis 50, vorzugsweise 10 bis 30 oxidiert. Die Gesamtoxidationszeit beträgt ca. 15 bis 50 Stunden.

Die erhaltenen Oxidate stellen helle, temperaturbeständige Wachse mit einer Jodfarbzahl (150 °C/30 Min.) von ca. 3, einer Höppler-Härte von ca. 1 100 bar und einem Schmelzbereich von 125 bis 130 °C dar. Die Schmelzindices d. h. MFI-Werte (160 °C/325 p) liegen im Bereich von 40 bis 100 Einheiten.

Die Produkte lassen sich ausgezeichnet stippenfrei und hell im Druckautoklaven emulgieren und werden üblichen Bodenpflegeemulsionen zugesetzt, um die Härte des Filmes und damit die mechanische Festigkeit zu erhöhen. Gegenüber den auf dem Markt befindlichen PE-Oxidaten für den Pflegemittelbereich zeichnen sich die durch das Wirbelschichtverfahren hergestellten Produkte erstens dadurch aus, daß sie um ca. 100 bis 150 bar härter sind und zweitens bei bereits niedrigeren Säurezahlen zu hellen, stippenfreien Emulsionen führen.

Letzeres dürfte der Verfahrensweise der Oxidation zuzuschreiben sein, die offenbar den Vorzug hat, zu homogeneren Oxidaten zu führen als übliche Marktprodukte. Darüber hinaus werden diese Produkte auch als PVC-Gleitmittel eingesetzt, wobei insbesondere Produkte mit niedriger Säurezahl bevorzugt werden.

Die nun folgenden Beispiele erläutern die Erfindung.

## Beispiel 1

50 kg eines Polyäthylens der Dichte 0,943 g/cm, einem Erweichungspunkt über 135 °C und einem Schmelzindex (MFI 190/21,6 g/10 min) von Null werden mit 0,25 kg Azobisisobutyronitril gemischt und 1 Stunde bei 110-120° unter einer Stickstoffatmosphäre erhitzt. Hierbei zersetzt sich der Initiator und es entstehen die Zersetzungsprodukte Tetramethylbernsteinsäuredinitril und Stickstoff. Tetramethylbernsteinsäuredinitril sublimiert bei dieser Temperatur ab, was durch einen zusätzlichen leichten Stickstoffstrom unterstützt wird ; schon nach 0,5 Stunden ist gaschromatografisch kein Zersetzungsprodukt im Polyäthylen mehr nachweisbar.

Das auf diese Weise vorbehandelte Polyäthylen wird in einen Wirbelschichtreaktor mit einer Siebbodenfläche von 0,25 m² überführt und bei einem Luftdurchsatz von 1 200 m³/h gewirbelt. Die Produkttemperatur wird durch die Heißluft in den ersten 15 Stunden zwischen 126 und 128 °C gehalten und danach auf 124-126 °C abgesenkt. Die Gesamtoxidationszeit beträgt 34 Stunden. Der Verlauf der Oxidation ist gekennzeichnet durch den zeitabhängigen Verlauf der Säurezahl, die durch Titration der in Xylol heiß gelösten Proben mit äthanolischer Kalilauge bestimmt wurde.

| Oxidationszeit Stunden | Säurezahl mg/KOH/g |
|---|---|
| 5 | 1,0 |
| 10 | 2,7 |
| 15 | 7,1 |
| 22 | 13,0 |
| 25 | 15,0 |
| 30 | 18,0 |
| 34 | 22,0 |

## Vergleichsbeispiel 1

50 kg eines Polyäthylens der Dichte 0,943 g/cm³ und einem Erweichungspunkt von 136 °C und einem Schmelzindex von Null werden mit 0,25 kg Azobisisobutyronitril gemischt und in einem Wirbelbettreaktor mit einer Siebfläche von 0,25 m² vorgelegt. Das Produktgemisch wird nun bei einem Luftdurchsatz von 1 200 m³/h (Normalbedingungen) gewirbelt und gleichzeitig durch die heiße Luft auf eine Temperatur von 124 °C aufgeheizt. Nach einer Wirbeldauer von 23 Stunden wird an einer Probe durch Titration der Oxidationsgrad über die Säurezahl bestimmt ; es hat praktisch kein oxidativer Abbau stattgefunden.

## Vergleichsbeispiel 2

50 kg Polyäthylen (Vergleichsbeispiel 1) werden im Wirbelschichtreaktor bei 25 °C (Raumtemperatur) und einem Luftdurchsatz von 5 000 m³/h. m² gewirbelt und gleichzeitig mit 2,75 kg einer Lösung von 0,25 kg Azobisisobutyronitril in 2,5 kg Chloroform besprüht. Danach wird durch Zuführung von heißer Luft eine Produkttemperatur von 126 °C eingestellt. Eine nach 11 Stunden Reaktionsdauer untersuchte Probe zeigt keinen signifikanten Gehalt an Carboxylgruppen.

## Vergleichsbeispiel 3

Man verfährt wie in Vergleichsbeispiel 2 beschrieben mit dem Unterschied, daß jetzt das Produkt während der Sprühdotierung nur gelegentlich umgeschichtet wird, so daß mit Sicherheit eine Benetzung der Produktoberfläche gegeben ist. Danach wird durch Zuführung von Heißluft das Polyäthylenpulver 15 Stunden bei 126 bis 128 °C gewirbelt. Eine nach dieser Zeit entnommene Probe zeigt ebenfalls keinerlei oxidativen Abbau.

## Anwendungstechnische Untersuchungen

Aus dem Beispiel 1 wurden in Abhängigkeit von der Zeit — nach 22, 25, 30 und 34 Stunden — Proben gezogen und auf PVC-Gleitmittelwirkung und Emulgierbarkeit geprüft.

Bei der PVC-Gleitmittelprüfung zeigte sich, daß unabhängig von der Säurezahl alle Produkte gegenüber dem Ausgangsprodukt eine deutlich höhere Verträglichkeit haben und somit den Produkten für die Herstellung von durchsichtigen PVC-Artikeln besondere Bedeutung zukommt.

Zur Prüfung auf Emulgierbarkeit wurden die Oxidate in einem Druckautoklaven nach folgendem Rezept emulgiert.

In einem 1-l-Druckautoklaven mit Rührer, Heizung und Zulaufgefäß wurden vorgelegt

```
100   Teile Wasser
  2,9 Teile Kaliumhydroxid
  1   Teil  Natriumbisulfit
 26   Teile oxidiertes Polyethylen (HDPE-Oxidat)
 24   Teile oxethyliertes Alkylphenol.
```

Es wurde auf 150 bis 160 °C aufgeheizt und 150 Teile Wasser wurden zugegeben. Nach Abkühlen wurden helle, transparente, stippenfreie HDPE-Dispersionen erhalten. Sie sind in der anschließenden Tabelle charakterisiert.

(Siehe Tabelle Seite 5 f.)

| Oxidat aus Versuch 1 nach ... Std. | IFZ[x] der Schmelze 30 min | Säurezahl Verseifungszahl | Erstarrungspunkt [°C] | Höppler-Härte [bar] | Lichtdurchlässigkeit der HDPE-Dispersion [%] | MFI[xx] 325/160°C |
|---|---|---|---|---|---|---|
| 22 | 3 | 13/24 | 125 | ca. 1100 | 60 | 37 |
| 25 | 3 | 15/26 | 124 | ca. 1100 | 65 | 40 |
| 30 | 3 | 18/3 | 123 | ca. 1100 | 70 | 45 |
| 34 | 3 | 22/38 | 123 | ca. 1100 | 75 | 60 |
| Vergleichsbeispiel 1 | 1-2 | 1 | nicht meßbar | nicht meßbar | nicht emulgierbar | nicht meßbar |
| Beispiel 1 DE-AS 14 95 938 | 7 | 28/39 | 123 | ca. 950 | 50 | ca 200 |
| Beispiel 1 DE-AS 14 95 938, jedoch mit geringem Oxidationsgrad | 3 | 15/16 | 125 | ca. 1000 | 30 | ca. 80 |

Jodfarbzahl   Hoppler härte : DGF-Einheitsmethode - M - III 9a (57)
Melt flow Index (Schmelzindex) ASTM D 1238 - GST DIN 53 735 (1970)

0 063 693

**Ansprüche**

1. Verfahren zur Herstellung von in Wasser emulgierbarem Polyethylen, bei dem Polyethylen mit einer Dichte von ca 0,93 bis 0,97 in Gegenwart von Sauerstoff bei Temperaturen oxidiert wird, die unterhalb des Erweichungspunkts des Polyethylens und oberhalb 100 °C liegen, dadurch gekennzeichnet, daß man die Oxidation in einem Wirbelbettreaktor durchführt und ein Polyethylen hierfür einsetzt, das vor der Oxidation in Gegenwart einer radikalbildenden organischen Verbindung, die sich bei Temperatur der Behandlungs zersetzt, unter Ausschluß von Sauerstoff in einem vom Wirbelbett räumlich getrennten Reaktor bei Temperaturen, die unterhalb des Erweichungspunktes des Polyethylens liegen, thermisch behandelt worden ist.

2. Verfahren gemäß Anspruch 1, dadurch gekennzeichnet, daß man ein Polyethylen einsetzt, das in Gegenwart von 0,05 bis 2 Gew.-% — bezogen auf das Polyethylen — der radikalbildenden Verbindung behandelt worden ist.

3. Verfahren gemäß Anspruch 1 oder 2, dadurch gekennzeichnet, daß man als radikalbildende Verbindung Azo-bis(2-methylpropionitril) einsetzt.

4. Verwendung der nach Verfahren gemäß Ansprüchen 1 bis 3 erhaltenen Produkte als emulgierbare Wachse für den Pflegemittelbereich.

5. Verwendung der nach Verfahren gemäß Ansprüchen 1 bis 3 erhaltenen Produkte als Gleitmittel für PVC.

**Claims**

1. A process for the preparation of water-emulsifiable polyethylene by oxidizing polyethylene having a density of from about 0.93 to 0.97 in the presence of oxygen at a temperature below the softening point of the polyethylene and above 100 °C, wherein the oxidation is carried out in a fluidized bed reactor using a polyethylene which, before oxidation, has been heated, with exclusion of oxygen, at a temperature below the softening point of the polyethylene, in the presence of an organic compound which forms free radicals and decomposes at the treatment temperature, in a reactor which is spatially separate from the fluidized bed.

2. A process as claimed in claim 1, wherein the polyethylene employed has been treated in the presence of from 0.05 to 2 % by weight, based on polyethylene, of the compound which forms free radicals.

3. A process as claimed in claim 1 or 2, wherein azo-bis-(2-methylpropionitrile) is employed as the compound which forms free radicals.

4. The use of the product obtained by a process as claimed in any of claims 1 to 3 as an emulsifiable wax for care products.

5. The use of the product obtained by a process as claimed in any of claims 1 to 3 as a PVC lubricant.

**Revendications**

1. Procédé de préparation de polyéthylène émulsifiable dans l'eau, dans lequel on oxyde du polyéthylène, d'une densité d'environ 0,93 à 0,97, en présence d'oxygène, à des températures inférieures au point de ramollissement du polyéthylène et supérieures à 100 °C, caractérisé en ce qu'on effectue l'oxydation dans un réacteur à lit en mouvement turbulent et qu'on y introduit un polyéthylène qui, avant l'oxydation, a été traité thermiquement, à des températures inférieures au point de ramollissement du polyéthylène, dans un réacteur séparé spatialement du lit en mouvement turbulent, avec exclusion d'oxygène, en présence d'un composé organique formateur de radicaux et qui se décompose à la température du traitement.

2. Procédé selon la revendication 1, caractérisé en ce qu'on introduit un polyéthylène qui a été traité en présence de 0,05 à 2 % en poids, par rapport au polyéthylène, du composé formateur de radicaux.

3. Procédé selon la revendication 1 ou 2, caractérisé en ce qu'on introduit, comme composé formateur de radicaux, de l'azo-bis(2-méthylpropionitrile).

4. Utilisation des produits obtenus par le procédé selon les revendications 1 à 3, comme cires émulsifiables dans le domaine des produits d'entretien.

5. Utilisation des produits obtenus par le procédé selon les revendications 1 à 3, comme lubrifiant pour PVC.